# EUROPÄISCHE PATENTSCHRIFT

(11) **EP 1 310 914 B1**
(45) Veröffentlichungstag und Bekanntmachung des Hinweises auf die Patenterteilung: **07.11.2007**
(21) Anmeldenummer: 02016160.0
(22) Anmeldetag: 20.07.2002
(51) Int. Cl.: G06T 7/00

(54) **Verfahren und Vorrichtung zum Anpassen von 2D Datenbereichen**
Method and device for adapting of 2D data ranges
Procédé et dispositif pour l'adaption d'une gamme de données 2D

(30) Priorität: 27.09.2001 DE 10147667
(43) Veröffentlichungstag der Anmeldung: 14.05.2003
(73) Patentinhaber: ROBERT BOSCH GMBH, 70442 Stuttgart (DE)
(72) Erfinder: Otte, Dirk, 30880 Laatzen (DE); Fink, Hauke, 31141 Hildesheim (DE)

(56) Entgegenhaltungen:
- DE-A- 19 860 679
- PAVLIDIS I ET AL: "On-line handwriting recognition using physics-based shape metamorphosis" PATTERN RECOGNITION, PERGAMON PRESS INC. ELMSFORD, N.Y, US, Bd. 31, Nr. 11, 1. November 1998 (1998-11-01), Seiten 1589-1600, XP004134407 ISSN: 0031-3203
- SEDERBERG T W ET AL: "A physically based approach to 2-D shape blending" SIGGRAPH '92. 19TH ANNUAL ACM CONFERENCE ON COMPUTER GRAPHICS AND INTERACTIVE TECHNIQUES, CHICAGO, IL, USA, 26-31 JULY 1992, Bd. 26, Nr. 2, Seiten 25-34, XP002262529 Computer Graphics, July 1992, USA ISSN: 0097-8930
- BARRETT W ET AL: "An image space algorithm for morphological contour interpolation" PROCEEDINGS GRAPHICS INTERFACE '94, PROCEEDINGS GRAPHICS INTERFACE '94, BANFF, ALTA., CANADA, 18-20 MAY 1994, Seiten 16-24, XP002262530 1994, Toronto, Ont., Canada, Canadian Inf. Process. Soc, Canada ISBN: 0-9695338-3-7

## Beschreibung

Die Erfindung bezieht sich auf ein Verfahren zum Anpassen von zweidimensionalen Datenbereichen, ein Verfahren zum Vereinigen von Datenbereichen unter Verwendung eines derartigen Verfahrens und eine Vorrichtung zum Durchführen dieser Verfahren.

Eine Anpassung von zweidimensionalen Datenbereichen ist insbesondere bei Kraftfahrzeug-Navigationssystemen relevant. Derartige Navigationssysteme erhalten Informationen und Daten über das Gebiet, in dem navigiert werden soll, durch Zugriff auf einen externen Datenträger. Zwischen Karten benachbarter Gebiete, deren Daten auf verschiedenen Datenträgern gespeichert sind, treten Überlappungen bzw. Überschneidungen und Löcher bzw. Leerbereiche ohne Daten auf, die eine Navigation über diese Gebiete hinweg verhindern und eine Darstellung auf der Anzeige erschweren.

Eine Verfahren zur Anpassung von zweidimensionalen Datengebieten ist aus der DE 198 60 679 A1 bekannt. Bei diesem Verfahren wird zunächst eine Ähnlichkeit zwischen zwei Punktmengen ermittelt, indem jedem Punkt der ersten Menge genau ein Punkt der zweiten Menge zugeordnet wird, diese Zuordnung durch Transformationsgleichungssysteme beschrieben wird und unter den verschiedenen möglichen Transformationsgleichungssystemen ein bestes ermittelt wird.

Ein derartiges Verfahren erfordert jedoch eine aufwendige Berechnung der Transformationsgleichungssysteme und somit einen hohen Rechenaufwand, insbesondere bei einer Anpassung von Datenbereichen über ein größeres Flächengebiet. Weiterhin müssen z. B. bei der Anpassung von benachbarten oder sich teilweise überlappenden Bildern zunächst als relevant erachtete Punkte in den Datenbereichen ermittelt und markiert werden, z. B. sich entsprechende Straßenkreuzungen. Eine derartige Anpassung zweier Datenbereiche ist somit relativ aufwendig und rechenintensiv.

Das erfindungsgemäße Verfahren zum Anpassen von Datenbereichen nach Anspruch 1 und die entsprechende Vorrichtung nach Anspruch 12 weisen demgegenüber den Vorteil auf, dass mit relativ geringem Aufwand, insbesondere relativ geringem Rechenaufwand, eine Anpassung der zweidimensionalen Datenbereiche möglich ist. Hierbei ist vorzugsweise nach Anspruch 11 ein Verfahren zur Vereinigung der Datenbereiche möglich, bei dem die angepassten Datenbereiche zusammengefasst werden. Die Unteransprüche beschreiben bevorzugte Weiterbildungen.

Der Erfindung liegt der Gedanke zugrunde, eine Anpassung eines der Datenbereiche - z. B. des ersten - an den anderen durchzuführen, indem zu den Randpunkten des betreffenden Datenbereiches geeignete Randpunkte des anderen Datenbereiches gesucht werden. Erfindungsgemäß ist - anders als bei dem eingangs genannte Verfahren - somit eine aufwendige Abschätzung, welche der gegenseitigen Projektionen die geeigneteste ist, nicht nötig. Die Ermittlung des geeigneten anderen Randpunktes kann hierbei durch eine relativ einfache Ermittlung erfolgen, bei der eine dem ersten Randpunkt gegenüberliegende zweite Randlinienstrecke durch Schneiden mit einer winkelteilenden Linie ermittelt wird und der von dem Schnittpunkt nächstliegende Randpunkt dieser gegenüberliegenden zweiten Randlinienstrecke genommen wird. Um sämtliche Leerräume auszuschließen, kann anschließend das Verfahren für verbleibende zweite Randpunkte umgekehrt wiederholt werden. Der Rechenaufwand der einzelnen Schritte ist hierbei gering, so dass auch umfangreiche Karten schnell und von Recheneinrichtungen mit beschränkter Rechenleistung angepasst werden können.

Erfindungsgemäß können hierbei die zweidimensionalen Datenbereiche jegliche Arten von Anordnungen von Objekten oder Merkmalen auf einer Fläche sein. Hierbei können insbesondere zweidimensionale Punktmengen, z. B. Karten benachbarter oder sich teilweise überlappender geographischer Gebiete angepasst werden, die in einer Kraftfahrzeug-Navigationseinrichtung verwendet werden. Das erfindungsgemäße Verfahren kann zum einen zur Erstellung von vereinigten Daten auf einem externen Datenträger, z. B. einer DVD, die die Daten mehrere CDs enthält, und zum anderen intern in einer Navigationseinrichtung verwendet werden, die jeweils aufgenommene Daten anpasst und vereint.

Die erfindungsgemäßen Verfahrensschritte der Ermittlung der gegenüberliegenden zweiten Randlinienstrecke, des zweiten Randpunktes der ermittelten zweiten Randlinienstrecke und der Verlegung des ersten Randpunktes müssen nicht unmittelbar aufeinanderfolgend ausgeführt werden, sondern können durch geeignete Zwischenschritte ergänzt werden.

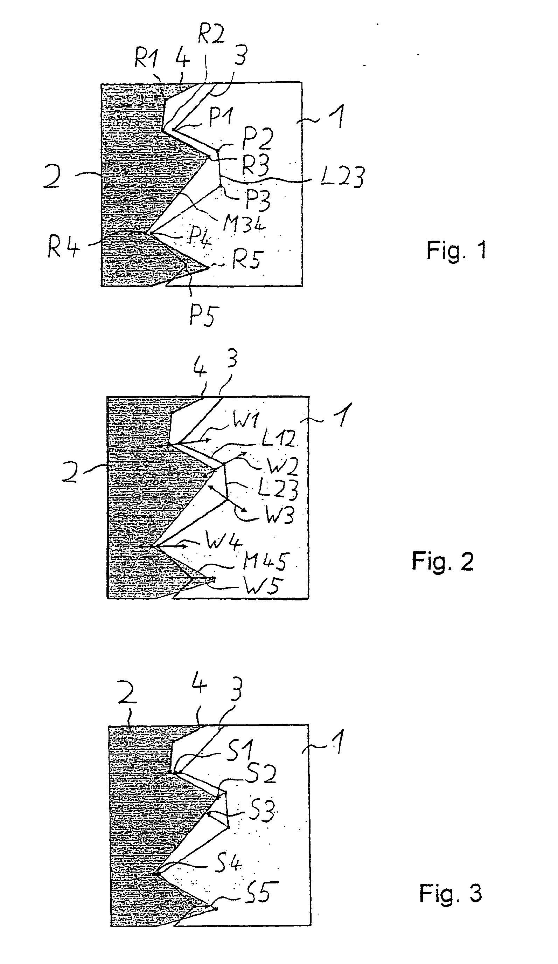

Die Erfindung wird im folgenden anhand der beiliegenden Zeichnungen näher erläutert. Die Figuren 1 bis 7 zeigen aufeinanderfolgende Schritte eines Verfahrens zur Anpassung zweier Datenbereiche gemäß einer Ausführungsform der Erfindung. Die Figuren zeigen hierbei nur Ausschnitte der beiden Datenbereiche.

Gemäß Figur 1 sind ein erster zweidimensionaler Datenbereich 1 und ein zweiter zweidimensionaler Datenbereich 2 zueinander benachbart vorgesehen und überlappen bzw. überschneiden sich teilweise. Der erste Datenbereich 1 wird durch eine erste Randlinie 3 begrenzt, die sich aus aufeinander folgenden ersten Randlinienstrecken Lij, i,j= 1, 2, 3, ... zusammensetzt. Jede Randlinienstrecke Lij ist hierbei zwischen zwei ersten Randpunkten Pi, i=1, 2, 3, ... ausgebildet, so dass die Randpunkte die Randlinienstrecke definieren. Somit kann der eine Fläche bedeckende erste Datenbereich 1 durch eine Folge der ersten Randpunkte Pi beschrieben werden, wobei im allgemeinen konvexe Stellen wie z. B. bei P1 und P4 und konkave Stellen wie z. B. bei P2, P3, P5 auftreten. Entsprechend ist der zweite als Fläche dargestellte Datenbereich 2 durch eine zweite Randlinie 4 begrenzt, die sich als Aneinanderreihung zweiter Randlinienstrecken Mij ergibt, die wiederum durch zweite Randpunkte Ri definiert werden.

Zunächst wird eine Anpassung des ersten Datenbereiches an den zweiten Datenbereich durchgeführt. Hierbei wird von ersten Randpunkten Pi ausgegangen, die nicht auf zweite Randpunkte fallen, da bei einer derartigen Übereinstimmung für die betreffenden Punkte keine weitere Anpassung erforderlich ist. Gemäß Figur 1 liegt bei keinem der gezeigten Punkte eine Übereinstimmung vor.

Gemäß Figur 2 wird zu den ersten Randpunkten Pi jeweils eine Winkelhalbierende Wi gebildet, die den zwischen den angrenzenden Randlinienstrecken Lij gebildeten Winkel halbiert. Die Winkelhalbierenden Wi werden in beide Richtungen berechnet, so dass jede Winkelhalbierende Wi - sowohl für konkave als auch konvexe Stellen - die zweite Randlinie 4 gemäß Figur 3 an einem Schnittpunkt Si oder auch mehreren Schnittpunkten schneidet. Falls sich mehrere Schnittpunkte ergeben, wird derjenige mit dem geringsten Abstand zu dem betreffenden ersten Punkt Pi, von dem die Winkelhalbierende Wi ausgeht, genommen, wobei z. B. der geometrische Abstand (Wurzel der Summe der Quadrate der Koordinatendifferenzen) verwendet werden kann. Falls der geringste Abstand größer als ein vorgegebener Vergleichswert ist, wird erkannt, dass eine Anpassung unsinnig ist, und die Ermittlung eines geeigneten zweiten Randpunktes zu dem betreffenden ersten Randpunkt abgebrochen. Somit wird eine Anpassung nur in hinreichend benachbarten Gebieten erreicht, ohne dass für diese Begrenzung zunächst relevante Gebiete der Datenbereiche ausgewählt werden müssen.

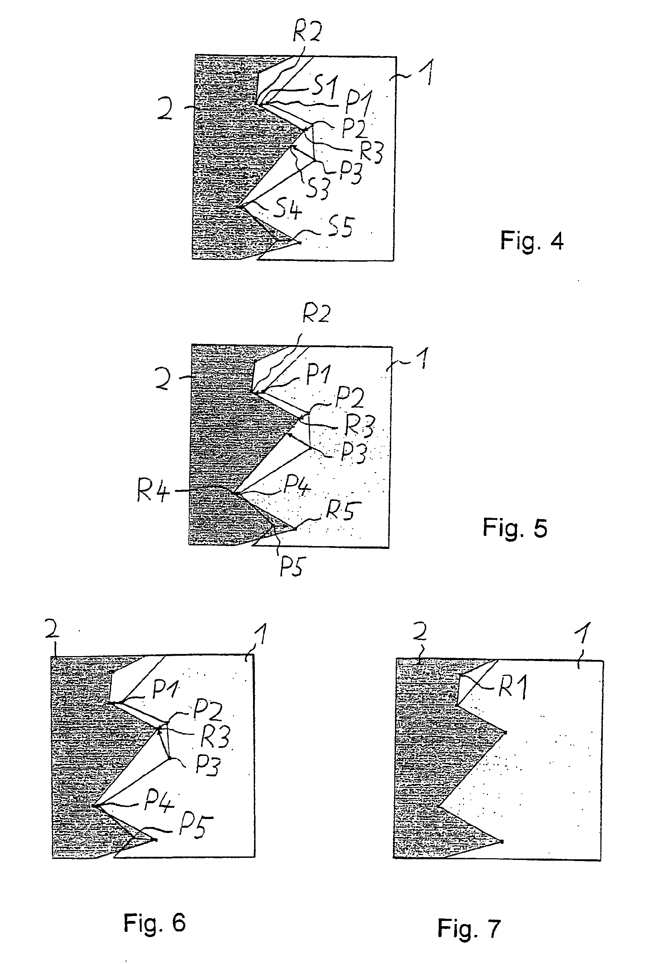

Gemäß Fig. 4 wird von dem Schnittpunkt Si ausgehend auf der betreffenden zweiten Randlinienstrecke Mij, auf der sich der Schnittpunkt befindet, der nächstliegende zweite Randpunkt Rj gewählt, z. B. als geometrischer Abstand.

Dieses Verfahren wird gemäß Figur 6 für alle ersten Randpunkte Pi durchgeführt, z.B. jeweils sukzessive für die Randpunkte aufeinanderfolgender erster Randlinienstrecken Lij. Anschließend werden gemäß Figur 7 die ersten Randpunkte Pi jeweils auf den ermittelten zweiten Randpunkt Rj gezogen. Hierbei können zwei oder mehr erste Randpunkte Pi auf einen gemeinsamen zweiten Randpunkt Rj gezogen werden, z. B. P2 und P3 auf R3, wodurch die erste Randlinienstrecke L23 zwischen P2 und P3 verschwindet.

Nach diesem ersten Verfahren bleiben in der Regel zweite Randpunkte, wie z. B. R1 gemäß Figur 7, auf die keine ersten Randpunkte gezogen wurden. Um die bei diesen Randpunkten gebildeten Leerräume zu füllen, wird das oben beschriebene Verfahren von den verbleibenden zweiten Randpunkten Ri ausgehend umgekehrt noch einmal ausgeführt und somit der zweite Randpunkt R1 z. B. auf den ersten Randpunkt P1 gezogen.

## Patentansprüche

1. Verfahren zum Anpassen von Datenbereichen,
bei dem ein durch eine erste Randlinie (3) begrenzter zweidimensionaler erster Datenbereich (1) und ein durch eine zweite Randlinie (4) begrenzter zwei-dimensionaler zweiter Datenbereich (2) an einander angepasst werden,
wobei die erste Randlinie (3) erste Randlinienstrecken (Lij), die durch erste Randpunkte (Pi) definiert sind, aufweist und die zweite Randlinie (4) zweite Randlinienstrecken (Mij), die durch zweite Randpunkte (Ri) definiert sind, aufweist, mit mindestens folgenden Schritten:
Ermittlung einer zweiten Randlinienstrecke (Mij) von mindestens einem ersten Randpunkt (Pi) aus,
Ermittlung eines zweiten Randpunktes (Ri) der ermittelten zweiten Randlinie (Mij), und
Verlegung des ersten Randpunktes (Pi) auf den ermittelten zweiten Randpunkt (Ri).

2. Verfahren nach Anspruch 1, **dadurch gekennzeichnet, dass** zu mehreren ersten Randpunkten (Pi) jeweils ein zweiter Randpunkt (Ri) ermittelt wird und nachfolgend die ersten Randpunkte (Pi) auf die ermittelten zweiten Randpunkte (Ri) verlegt werden.

3. Verfahren nach Anspruch 1 oder 2, **dadurch gekennzeichnet, dass** bei dem Schritt der Ermittlung einer zweiten Randlinienstrecke (Mij) von dem ersten Randpunkt (Pi) aus eine winkelteilende Linie (Wi) gebildet wird, die durch den ersten Randpunkt (Pi) verläuft und einen Winkel teilt, der zwischen den von dem ersten Randpunkt (Pi) ausgehenden ersten Randlinienstrecken gebildet ist, und ein Schnittpunkt (Si) der winkelteilenden Linie (Wi) mit einer zweiten Randlinienstrecke (Mij) ermittelt wird.

4. Verfahren nach Anspruch 3, **dadurch gekennzeichnet, dass** die winkelteilende Linie eine Winkelhalbierende (Wi) ist, die den zwischen den ersten Randlinienstrecken (Lij) gebildeten Winkel halbiert.

5. Verfahren nach Anspruch 3 oder 4, **dadurch gekennzeichnet, dass** in dem Fall, dass durch die winkelteilende Linie (Wi) und die zweite Randlinie (4) mehrere Schnittpunkte gebildet werden, der Schnittpunkt mit dem geringsten Abstand zu dem betreffenden ersten Randpunkt (Pi) genommen wird.

6. Verfahren nach einem der Ansprüche 3 bis 5, **dadurch gekennzeichnet, dass** bei dem Schritt der Ermittlung der zweiten Randlinienstrecke (Mij) in dem Fall, dass Schnittpunkte (Si), deren Abstand von dem jeweiligen ersten Randpunkt (Pi) einen vorgegebenen Vergleichswert überschreitet, nicht verwendet werden und kein zweiter Randpunkt zu dem betreffenden ersten Randpunkt ermittelt wird.

7. Verfahren nach einem der Ansprüche 3 bis 6, **dadurch gekennzeichnet, dass** bei dem Schritt der Ermittlung des zweiten Randpunktes (Ri) der zweiten Randlinie (Mij) von dem Schnittpunkt (Si) aus der nächstliegende zweite Randpunkt (Ri) der zweiten Randlinie (Mij) ermittelt wird.

8. Verfahren nach einem der vorherigen Ansprüche, **dadurch gekennzeichnet, dass** nach der Anpassung des ersten Datenbereiches an den zweiten Datenbereich (2) in nachfolgenden Schritten der zweite Datenbereich (2) an den ersten Datenbereich (1) angepasst wird, wobei zu zweiten Randpunkten (Ri), die nicht auf ersten Randpunkten (Pi) liegen, erste Randpunkte (Pi) ermittelt werden und die zweiten Randpunkte (Ri) auf die ermittelten ersten Randpunkte (Pi) verlegt werden.

9. Verfahren nach einem der vorherigen Ansprüche, **dadurch gekennzeichnet, dass** der erste Datenbereich (1) und der zweite Datenbereich (2) sich vor ihrer Anpassung teilweise überlappen.

10. Verfahren zum Vereinigen von Datenbereichen, bei dem zwei nebeneinanderliegende oder sich teilweise überlappende zweidimensionale Datenbereiche (1, 2) durch ein Verfahren nach einem der vorherigen Ansprüche angepasst werden und nachfolgend ein gemeinsamer Datenbereich gebildet wird, der die angepassten Datenbereiche umfasst.

11. Verfahren nach Anspruch 10, **dadurch gekennzeichnet, dass** bei der Bildung des gemeinsamen Datenbereiches eine Menge gemeinsamer Randpunkte gebildet wird, aus der die ersten und zweiten Randpunkte (Pi, Ri), die zwischen dem ersten Datenbereich und dem zweiten Datenbereich liegen, entfallen.

12. Vorrichtung, insbesondere Kraftfahrzeug-Navigationseinrichtung **gekennzeichnet durch** Mittel zum Durchführen eines Verfahrens nach einem der vorherigen Ansprüche.

## Claims

1. Method for matching data areas,
in which a two-dimensional first data area (1) bounded by a first periphery line (3) and a two-dimensional second data area (2) bounded by a second periphery line (4) are matched to one another,
where the first periphery line (3) has first periphery line sections (Lij), which are defined by first periphery points (Pi), and the second periphery line (4) has second periphery line sections (Mij), which are defined by second periphery points (Ri), having at least the following steps:
a second periphery line section (Mij) is ascertained from at least one first periphery point (Pi),
a second periphery point (Ri) on the ascertained second periphery line (Mij) is ascertained, and
the first periphery point (Pi) is laid onto the ascertained second periphery point (Ri).

2. Method according to Claim 1, **characterized in that** for a plurality of first periphery points (Pi) a respective second periphery point (Ri) is ascertained and subsequently the first periphery points (Pi) are laid onto the ascertained second periphery points (Ri).

3. Method according to Claim 1 or 2, **characterized in that** the step of ascertaining a second periphery line section (Mij) from the first periphery point (Pi) involves the formation of an angle-subdividing line (Wi) which runs through the first periphery point (Pi) and subdivides an angle which is formed between the first periphery line sections starting from the first periphery point (Pi), and ascertainment of a point of intersection (Si) between the angle-subdividing line (Wi) and a second periphery line section (Mij).

4. Method according to Claim 3, **characterized in that** the angle-subdividing line is an angle bisector (Wi) which bisects the angle formed between the first periphery line sections (Lij).

5. Method according to Claim 3 or 4, **characterized in that** if the angle-subdividing line (Wi) and the second periphery line (4) form a plurality of points of intersection then the point of intersection with the shortest distance from the relevant first periphery point (Pi) is taken.

6. Method according to one of Claims 3 to 5, **characterized in that** the step of ascertaining the second periphery line section (Mij) involves points of intersection (Si) whose distance from the respective first periphery point (Pi) exceeds a prescribed comparison value not being used and no second periphery point being ascertained for the relevant first periphery point.

7. Method according to one of Claims 3 to 6, **characterized in that** the step of ascertaining the second periphery point (Ri) on the second periphery line (Mij) involves the next second periphery point (Ri) on the second periphery line (Mij) being ascertained from the point of intersection (Si).

8. Method according to one of the preceding claims, **characterized in that** when the first data area has been matched to the second data area (2), the second data area (2) is matched to the first data area (1) in subsequent steps, with first periphery points (Pi) being ascertained for second periphery points (Ri) which are not situated on first periphery points (Pi), and the second periphery points (Ri) being laid onto the ascertained first periphery points (Pi).

9. Method according to one of the preceding claims, **characterized in that** the first data area (1) and the second data area (2) partially overlap before they are matched.

10. Method for combining data areas, in which two adjacent or partially overlapping two-dimensional data areas (1, 2) are matched using a method according to one of the preceding claims and subsequently a common data area is formed which comprises the matched data areas.

11. Method according to Claim 10, **characterized in that** the formation of the common data area involves a set of common periphery points being formed from which the first and second periphery points (Pi, Ri), which are situated between the first data area and the second data area, are omitted.

12. Apparatus, particularly a motor vehicle navigation device, **characterized by** means for carrying out a method according to one of the preceding claims.

## Revendications

1. Procédé d'adaptation de zones de données, selon lequel une première zone de données (1) bidimensionnelle délimitée par une première ligne marginale (3) et une deuxième zone de données (2) bidimensionnelle délimitée par une deuxième ligne marginale (4) sont adaptées l'une à l'autre, et dont la première ligne marginale (3) présente des premiers tronçons de ligne marginale (Lij) définis par des premiers points marginaux (Pi), alors que la deuxième ligne marginale (4) présente des deuxièmes tronçons de ligne marginale (Mij) définis par des deuxièmes points marginaux (Ri),
comprenant au moins les étapes suivantes :
- détermination d'un deuxième tronçon de ligne marginale (Mij) depuis au moins un premier point marginal (Pi),
- détermination d'un deuxième point marginal (Ri) du deuxième tronçon de ligne marginale (Mij) déterminé, et
- déplacement du premier point marginal (Pi) sur le deuxième point marginal (Ri) déterminé.

2. Procédé selon la revendication 1,
**caractérisé en ce que**
pour plusieurs premiers points marginaux (Pi) on détermine respectivement un deuxième point marginal (Ri) et on déplace ensuite les premiers points marginaux (Pi) sur les deuxièmes points marginaux (Ri) déterminés.

3. Procédé selon la revendication 1 ou 2,
**caractérisé en ce que**
on forme lors de la première étape de détermination d'un tronçon de ligne marginale (Mij) en partant du premier point marginal (Pi) une ligne (Wi) passant par le premier point marginal (Pi) et qui partage un angle formé entre les premiers tronçons de ligne marginale partant du premier point marginal (Pi) et on détermine un point d'intersection (Si) de la ligne (Wi) de partage d'un angle avec un deuxième tronçon de ligne marginale (Mij).

4. Procédé selon la revendication 3,
**caractérisé en ce que**
la ligne de partage d'angle est une bissectrice (Wi) partageant en deux l'angle formé entre les premiers tronçons de ligne marginale (Lij)

5. Procédé selon la revendication 3 ou 4,
**caractérisé en ce qu'**
au cas où la ligne de partage d'angle (Wi) et la deuxième ligne marginale (4) forment plusieurs points d'intersection, on prend le point d'intersection ayant la plus faible distance par rapport au premier point marginal (Pi) concerné.

6. Procédé selon l'une des revendications 3 à 5,
**caractérisé en ce que**
lors de l'étape de détermination du deuxième tronçon de ligne marginale (Mij), si on n'utilise pas des points d'intersection (Si) dont la distance par rapport au premier point marginal (Pi) respectif dépasse une valeur de comparaison prédéfinie, on ne détermine pas de deuxième point marginal par rapport au premier point marginal concerné.

7. Procédé selon l'une des revendications 3 à 6,
**caractérisé en ce que**
lors de l'étape de détermination du deuxième point marginal (Ri) de la deuxième ligne marginale (Mij) on détermine le deuxième point marginal (Ri) de la deuxième ligne marginale (Mij) le plus proche en partant du point d'intersection (Si).

8. Procédé selon l'une des revendications précédentes,
**caractérisé en ce qu'**
après l'adaptation de la première zone de données à la deuxième zone de données (2) on adapte dans les étapes suivantes la deuxième zone de données (2) à la première zone de données (1), en déterminant des premiers points marginaux (Pi) par rapport à des deuxièmes points marginaux (Ri), non situés sur des premiers points marginaux (Pi), et en déplaçant les deuxièmes points marginaux (Ri) sur les premiers points marginaux (Pi) déterminés.

9. Procédé selon l'une des revendications précédentes,
**caractérisé en ce qu'**
avant leur adaptation, la première zone de données (1) et la deuxième zone de données (2) se chevauchent partiellement.

10. Procédé d'association de zones de données, selon lequel un procédé selon l'une des revendications précédentes permet d'adapter deux zones de données (1, 2) bidimensionnelles juxtaposées ou se chevauchant partiellement pour former ensuite une zone de données commune comprenant les zones de données adaptées.

11. Procédé selon la revendication 10,
**caractérisé en ce que**
lors de la formation de la zone de données commune, on forme une quantité de points marginaux communs dont on supprime les premiers et deuxièmes points marginaux (Pi, Ri) situés entre la première zone de données et la deuxième zone de données.

12. Dispositif, en particulier système de navigation d'un véhicule automobile,
**caractérisé par**
des moyens pour mettre en oeuvre un procédé selon l'une des revendications précédentes.
